# EUROPEAN PATENT APPLICATION

(11) **EP 2 611 121 A1**
(43) Date of publication of application: **03.07.2013**
(21) Application number: 11819833.2
(22) Date of filing: 16.08.2011
(51) Int. Cl.: H04M 1/21, H04B 5/02, H04M 1/00

(54) **SENSOR MODULE**

(30) Priority: 27.08.2010 JP 2010190351
(71) Applicant: NTT DoCoMo, Inc., Tokyo 100-6150 (JP)
(72) Inventor: HAYASHI, Kouki, Tokyo 100-6150 (JP); NAKATSUCHI, Masaharu, Tokyo 100-6150 (JP); ISHIDA, Masanori, Tokyo 100-6150 (JP)
(74) Representative: MERH-IP Matias Erny Reichl Hoffmann
(86) International application number: PCT/JP2011/068574
(87) International publication number: WO 2012/026370

(57) **Abstract**

There is provided a sensor module that is readily attachable to and detachable from a mobile terminal, can incorporate a sensor function at low development cost and is capable of maintaining the waterproofness of a mobile phone. The sensor module of the present invention comprises a housing, a sensor element, a sensor data processing part, a sensor data recording part, contactless communication means, a module communication part and a module control part. The housing has attaching means for attaching and detaching the sensor module to and from a mobile terminal. The sensor data processing part acquires data from the sensor element and performs predetermined processing on the acquired data.

## Description

### [TECHNICAL FIELD]

The present invention relates to a sensor module readily attachable to and detachable from a mobile terminal.

### [BACKGROUND ART]

A technique to customize a mobile terminal is described in Patent literature 1. The technique provides a mobile phone cover having a surface design of a mobile phone that can be changed in an easy and simple manner. Patent literature 2 describes a technique to allow a user to add a function of the user's choice to a mobile phone. The user of the mobile phone can add a function of his/her choice to the mobile phone by attaching a rear panel having the particular additional function. A technique described in Patent literature 3 allows a user to attach a module having a desired function to the main unit of a mobile phone to customize the mobile phone and to reuse the module. A technique described in Patent literature 4 is to attach a contactless communication card on which data is recorded to a mobile terminal to allow the data to be read through contactless communication. In addition to these techniques, mobile phones incorporating sensors such as a blood sugar sensor, an ultraviolet sensor, and an alcohol sensor are commercially available.

### [PRIOR ART LITERATURE]

### [PATENT LITERATURE]

Patent literature 1: Japanese Utility Model No. 3127674
Patent literature 2: Japanese Patent Application Laid-Open No. 2004-172654
Patent literature 3: Japanese Patent Application Laid-Open No. 2007-116375
Patent literature 4: Japanese Patent Application Laid-Open No. 2010-73066

### [SUMMARY OF THE INVENTION]

### [PROBLEMS TO BE SOLVED BY THE INVENTION]

However, the technique described in Patent literature 1 customizes only appearance, not the functionality of the mobile phone. The technique described in Patent literature 2 may require a high cost of development of the rear panel and it may be difficult to make the coupling portion between the main unit and the rear panel waterproof. The technique described in Patent literature 3 involves connectors of sockets for connecting the module, which may make it difficult to provide waterproofness. The technique described in Patent literature 4 is a technique to read data and is not a technique to add functions. Mobile phones incorporating sensors such as a blood sugar sensor, an ultraviolet sensor and an alcohol sensor require high development cost and do not allow users to customize the mobile phones on their own.

As has been described above, users can obtain mobile phones having designs that suit their preferences. However, there is no technique that allows users to readily add functions of users' choice, enables modules that have the functions of sensors to be developed at low cost, and is capable of maintaining the waterproofness of mobile phones.

An object of the present invention is to provide a sensor module that is readily attachable to and detachable from a mobile terminal, has a sensor function, can be developed at low cost, and is capable of maintaining waterproofness of a mobile phone.

### [MEANS TO SOLVE THE PROBLEMS]

A sensor module of the present invention is attachable to and detachable from a mobile terminal and, when attached to a mobile terminal, can add a function to the mobile terminal. A first sensor module of the present invention comprises a housing, a sensor element, a sensor data processing part, a sensor data recording part, a contactless power supply antenna, a module communication part and a module control part. A second sensor module of the present invention comprises a housing, a sensor element, a sensor data processing part, a sensor data recording part, a battery, a module communication part and a module control part.

The housing comprises attaching means for attaching and detaching the sensor module to and from a mobile terminal. The sensor element may be any sensor element selected from various sensors such as a clinical thermometer, an air thermometer/hygrometer, an ultraviolet meter, and a halitosis meter, as appropriate. The sensor data processing part acquires data from the sensor element and performs predetermined processing on the acquired data. The predetermined processing may be conversion of data in an output format specific to the sensor element to data in a format that can be provided to the mobile terminal (for example conversion of analog data to digital data) or, if there is more than one output from the sensor element, averaging or simple statistical processing, and may be predetermined according to the type of the sensor element and information to be acquired. The sensor data recording part records data acquired or processed by the sensor data processing part. The module control part controls the sensor element, the sensor data processing part and the module communication part.

The contactless power supply antenna of the first sensor module is capable of electromagnetically coupling with a mobile terminal without contacting the mobile terminal. The module communication part transmits and receives data to and from the mobile terminal through the contactless power supply antenna. In the second sensor module, the module communication part transmits and receives data to and from the mobile terminal via wireless or infrared communication.

Any of the sensor modules of the present invention may further comprise a power control part. The module control part sends information controlling which of the sensor element, the sensor data processing part and the module communication part is to be activated to the power control part. The power control part supplies electric power to the sensor element, the sensor data processing part and the module communication part only when they operate.

### [EFFECTS OF THE INVENTION]

Any of the sensor modules of the present invention can be readily attached and detached because the housing has attaching means. Since the sensor module has the sensor element and the sensor data processing part, the sensor modules enables a function to be added. Furthermore, a new sensor module can be developed at low cost by changing the processing by the sensor element and the sensor data processing part. Moreover, waterproofness of the mobile terminal can be maintained because the sensor module comprises contactless power supply means and communication means.

### [BRIEF DESCRIPTION OF THE DRAWINGS]

Fig. 1A is a diagram illustrating a sensor module of a first embodiment attached to a mobile terminal; Fig. 1B is a diagram illustrating the sensor module of the first embodiment separated from the mobile terminal; Fig. 1C is a diagram illustrating the sensor module of the first embodiment halfway attached to the mobile terminal;
Fig. 2 is a conceptual diagram illustrating a physical configuration of the sensor module of the first embodiment;
Fig. 3 is a diagram illustrating an exemplary functional configuration of the sensor module of the first embodiment and a mobile terminal;
Fig. 4 is a conceptual diagram illustrating a physical configuration of a sensor module of a second embodiment;
Fig. 5 is a diagram illustrating an exemplary functional configuration of the sensor module of the second embodiment and a mobile terminal.

### DETAILED DESCRIPTION OF THE EMBODIMENTS

Embodiments of the present invention will be described below in detail. Components that have the same functions are labeled with the same numerals and repeated description thereof will be omitted.

### [FIRST EMBODIMENT]

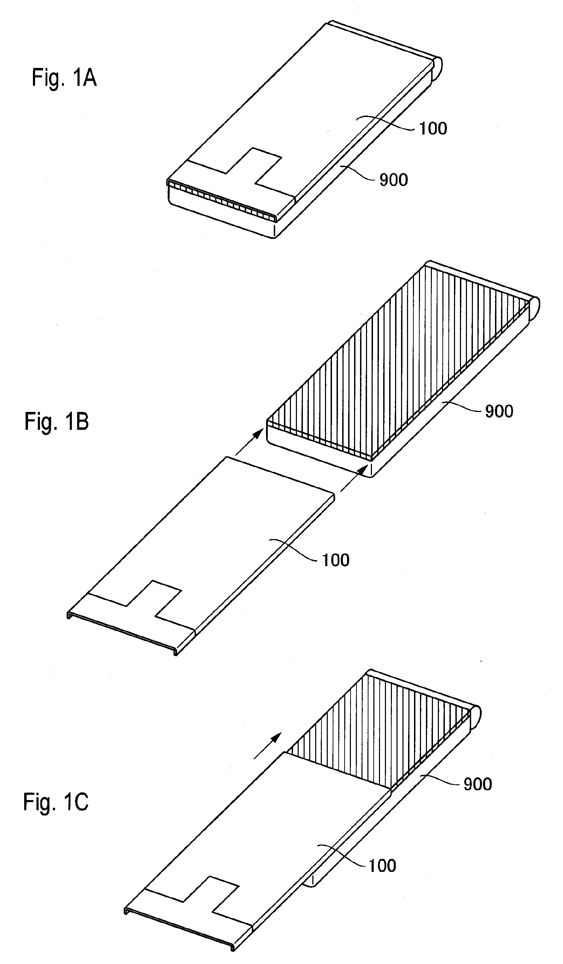

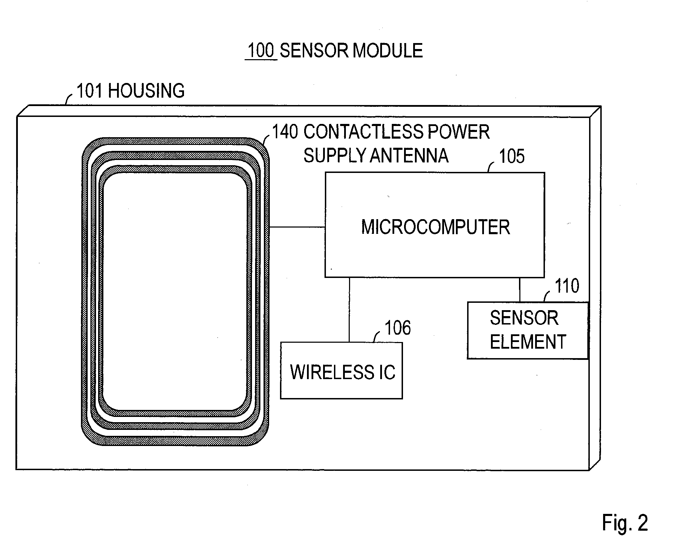

Figs. 1A, 1B and 1C are diagrams illustrating how a sensor module of a first embodiment is attached to a mobile terminal. Fig. 1A illustrates a sensor module 100 attached to a mobile terminal 900, Fig. 1B illustrates the sensor module 100 separated from the mobile terminal 900, and Fig. 1C illustrates the sensor module 100 halfway attached to the mobile terminal 900. Fig. 2 is a conceptual diagram illustrating a physical configuration of the sensor module of the first embodiment. A housing 101 of the sensor module 100 has attaching means (not depicted) for attaching and detaching the sensor module 100 to and from a mobile terminal 900. The attaching means may be, but not limited to, attaching means using a groove and a hook, screw-type attaching means, or adhesive-sheet-type attaching means, for example. Externally attachable attaching means is preferable because attaching the sensor module 100 externally to the housing of the mobile terminal 900 makes it easier for the sensor element to be exposed to the outside. The sensor module 100 includes a microcomputer 105, a wireless IC 106, a sensor element 110 and a contactless power supply antenna 140 inside the housing 101.

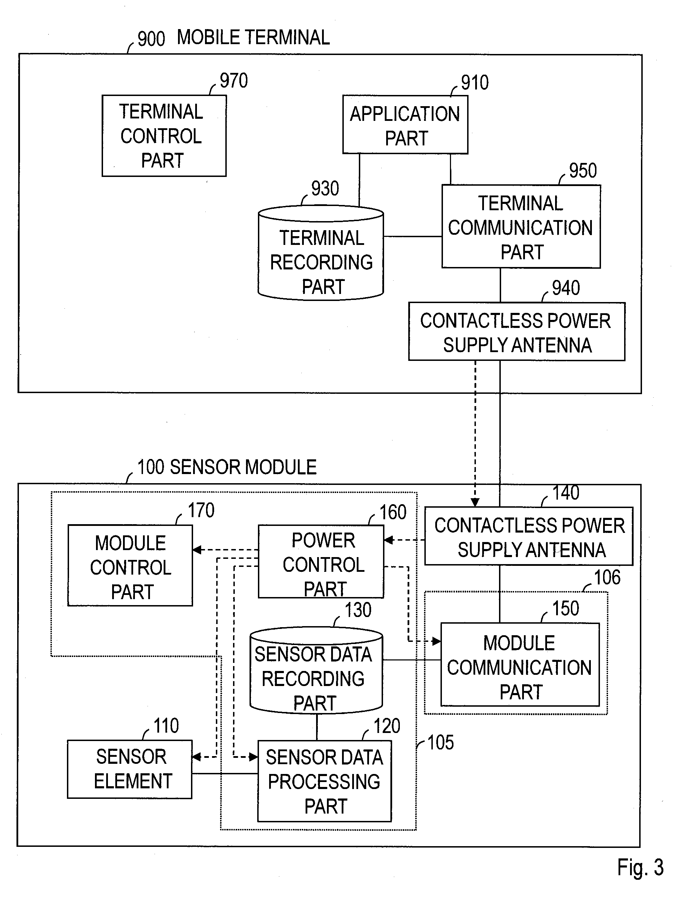

Fig. 3 is a diagram illustrating an exemplary functional configuration of the sensor module of the first embodiment and a mobile terminal. The mobile terminal 900 comprises an application part 910, a terminal recording part 930, a contactless power supply antenna 940, a terminal communication part 950, a terminal control part 970 among other components. The sensor module 100 comprises a sensor element 110, a sensor data processing part 120, a sensor data recording part 130, a contactless power supply antenna 140, a module communication part 150, a power control part 160 and a module control part 170 inside the housing 101. The solid lines interconnecting components in Fig. 3 represent that data is sent and received between the components. The dashed lines interconnecting components in Fig. 3 represent flows of electric power supplied from the mobile terminal 900. Flows of control signals in the mobile terminal 900 and the sensor module 100 are omitted from Fig. 3.

In this embodiment, electric power is supplied from the contactless power supply antenna 940 of the mobile terminal 900 to the contactless power supply antenna 140 of the sensor module 100 by electromagnetic coupling. The contactless power supply antenna 940 and the contactless power supply antenna 140 are also used for communication between the mobile terminal 900 and the sensor module 100. Specifically, using the power supply method used for RFID (Radio Frequency Identification), which is incorporated in most mobile phones, is convenient since it does not require any modifications to the hardware of the mobile terminal 900. However, electromagnetic induction methods or resonance methods (a method that uses magnetic field coupling or a method that uses electric field coupling) or other methods that can contactlessly supply electric power and provide communication may also be used.

The application part 910 has functions such as the functions of providing a trigger for power supply from the mobile terminal 900 to the sensor module 100, providing a trigger for initiating measurement by the sensor module 100, providing a trigger for transmitting measured sensor data to the mobile terminal 900. The terminal recording part 930 receives measured sensor data and then records the measured sensor data. The contactless power supply antenna 940 is an antenna for contactlessly supplying electric power and providing communication and may be an RFID antenna, for example. The terminal communication part 950 controls data communication and the power supply functions that use the contactless power supply antenna 940. The terminal control part 970 controls the terminal recording part 930 and the terminal communication part 950 on the basis of triggers provided from the application part 910.

The sensor element 110 may be a sensor element selected from various types of sensors such as a clinical thermometer, an air thermometer/hygrometer, an ultraviolet meter, a halitosis meter, an alcohol meter, an acceleration sensor, a force sensor and a push sensor as appropriate. The sensor element 110 does not need to be limited to one type; a plurality of types of sensors may be provided. The sensor data processing part 120 acquires data from the sensor element 110 and performs predetermined processing on the acquired data. The predetermined processing may be conversion of data in an output format specific to the sensor element 110 to data in a format that can be provided to the mobile terminal 900 (for example conversion from analog data to digital data) or, if there is more than one output from the sensor element 110, averaging or simple statistical processing (for example determining maximum and minimum values), and may be predetermined according to the type of the sensor element 110 and information to be acquired. The sensor data recording part 130 records data acquired or processed by the sensor data processing part 120. The contactless power supply antenna 140 is capable of electromagnetically coupling with the contactless power supply antenna 940 to supply electric power and provide communication without contacting the contactless power supply antenna 940. The module communication part 150 transmits and receives data to and from the mobile terminal 900 through the contactless power supply antenna 140.

The module control part 170 controls the sensor element 110, the sensor data processing part 120 and the module communication part 150. The module control part 170 sends information for controlling which of the sensor element 110, the sensor data processing part 120 and the module communication part 150 is to be activated to the power control part 160. The information for controlling which of these components is to be activated may be information indicating which of the components is to be activated or, if the power control part 160 records the relationship (a correspondence table) between processing (for example, measurement, data processing or communication) and components to be activated beforehand, may be information indicating processing.

The power control part 160 supplies electric power to the sensor element 110, the sensor data processing part 120 and the module communication part 150 only when they operate. For example, when measurement is performed, the power control part 160 supplies electric power to the sensor element 110 and the sensor data processing part 120. When data processing is performed, the power control part 160 supplies electric power to the sensor data processing part 120. When communication is performed, the power control part 160 supplies electric power to the module communication part 150. On standby (when the sensor module 100 is idle), the power control part 160 is ready for supplying electric power to the module communication part 150. The power control part 160 constantly supplies electric power to the module control part 170 (on standby, the power control part 160 is ready for supplying electric power to the module control part 170).

The exemplary functional configuration in Fig. 3 can be implemented simply by software causing the microcomputer 105 in Fig. 2, which is hardware, to function as the sensor data processing part 120, the sensor data recording part 130, the power control part 160 and the module control part 170. However, the configuration of hardware is not limited to the one illustrated in Fig. 2. For example, if the module communication part 150 is implemented inside the microcomputer 105, the wireless IC 106 is not necessary. Alternatively, the microcomputer 105 may be configured to function as the power control part 160 and the module control part 170 whereas the sensor data processing part 120, the sensor data recording part 130 and the module communication part 150 may be implemented by separate pieces of hardware.

The sensor module of the first embodiment can be readily attached and detached because the housing 101 comprises attaching means. Since the sensor module has the sensor element 110 and the sensor data processing part 120, a function can be added. Furthermore, a new sensor module can be developed at low cost by changing the processing performed by the sensor element 110 and the sensor data processing part 120. Moreover, since the sensor module comprises the contactless power supply antenna 140 and the module communication part 150, which are contactless power supply means and communication means (rather than using connectors), the waterproofness of the mobile terminal can be maintained. By making the sensor module 100 waterproof, the waterproofness of the entire system can be achieved even though the additional function is added.

### [Variation]

If power consumption in the sensor module 100 is sufficiently small compared with electric power supplied from a mobile terminal 900 or if power consumption when the sensor element 110, the sensor data processing part 120 and the module communication part 150 are not operating is small, the power control part 160 in Fig. 3 can be omitted. In that case, electric power received at the contactless power supply antenna 140 is supplied to the sensor element 110, the sensor data processing part 120, the module communication part 150 and the module control part 170 regardless of whether or not they are operating.

### [SECOND EMBODIMENT]

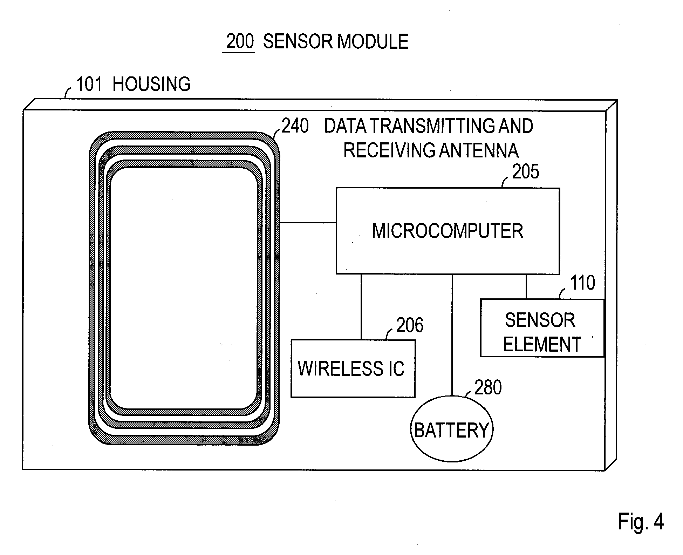

A sensor module of a second embodiment is also attachable to a mobile terminal in the same way as illustrated in Fig. 1. Fig. 4 is a conceptual diagram of a physical configuration of the sensor module of the second embodiment. A housing 101 of the sensor module 200 comprises attaching means as in the first embodiment. The sensor module 200 comprises a microcomputer 205, a wireless IC 206, a sensor element 110, a data transmitting and receiving antenna 240 and a battery 280 inside the housing 101.

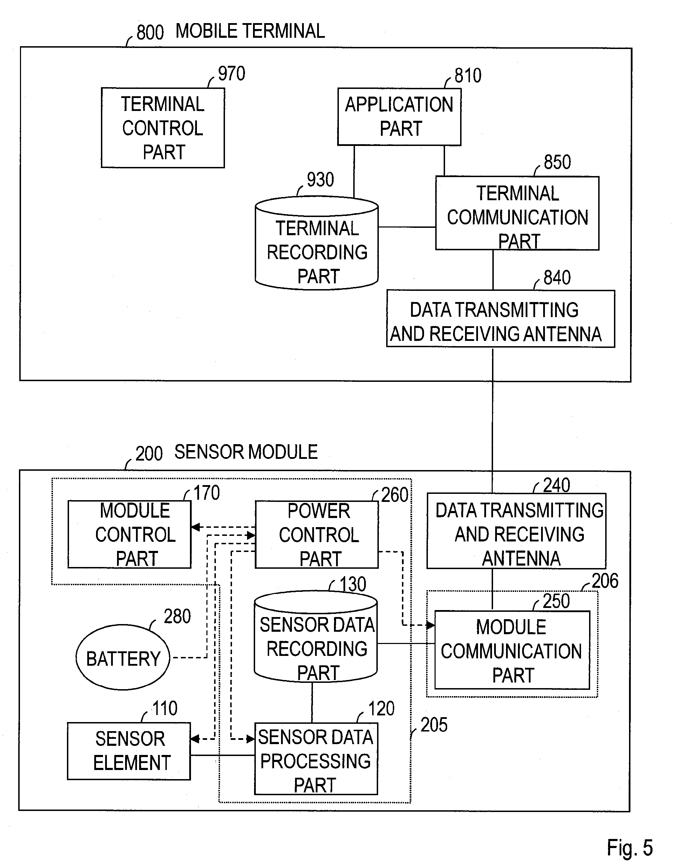

Fig. 5 is a diagram illustrating an exemplary functional configuration of the sensor module of the second embodiment and a mobile terminal. The mobile terminal 800 comprises an application part 810, a terminal recording part 930, a data transmitting and receiving antenna 840, a terminal communication part 850 and a terminal control part 970 among other components. The sensor module 200 comprises a sensor element 110, a sensor data processing part 120, a sensor data recording part 130, a data transmitting and receiving antenna 240, a module communication part 250, a power control part 260 and a module control part 170 inside the housing 101. The solid lines interconnecting components in Fig. 5 represent that data is sent and received between the components. The dashed lines interconnecting components in Fig. 5 represents flows of electric power. Flows of control signals in the mobile terminal 800 and the sensor module 200 are omitted from Fig. 5.

In this embodiment, the power source of the sensor module 200 is a battery 280. The data transmitting and receiving antenna 840 and the data transmitting and receiving antenna 240 are used for communication between the mobile terminal 800 and the sensor module 200. Specifically, the method used for the communication may be Bluetooth (registered trademark), TransferJet (registered trademark), RFID (Radio Frequency Identification), or infrared communication. Any other method that enables contactless communication may be used.

The application part 810 has functions such as the functions of providing a trigger for initiating measurement by the sensor module 200 and providing a trigger for transmitting measured sensor data to the mobile terminal 800. The terminal recording part 930 receives measured sensor data and then records the measured sensor data. The data transmitting and receiving antenna 840 is an antenna for performing contactless communication. If infrared communication is used, an infrared light source and an infrared light receiving element are used instead. The terminal communication part 850 controls data communication that uses the data transmitting and receiving antenna 840. The terminal control part 970 controls the terminal recording part 930 and the terminal communication part 850 on the basis of triggers provided from the application part 810.

The sensor element 110, the sensor data processing part 120 and the sensor data recording part 130 are the same as those in the first embodiment. The data transmitting and receiving antenna 240 is capable of contactlessly communicating with the data transmitting and receiving antenna 840. The module communication part 250 transmits and receives data to and from the mobile terminal 800 through the data transmitting and receiving antenna 240.

The module control part 170 controls the sensor element 110, the sensor data processing part 120 and the module communication part 250. The module control part 170 sends information for controlling which of the sensor element 110, the sensor data processing part 120 and the module communication part 250 is to be activated to the power control part 260. The information for controlling which of these components is to be activated may be information indicating which of the components is to be activated or, if the power control part 160 records the relationship (a correspondence table) between processing (for example, measurement, data processing or communication) and components to be activated beforehand, may be information indicating processing.

The power control part 260 supplies electric power supplied from the battery 280 to the other components. However, the power control part 260 supplies electric power to the sensor element 110, the sensor data processing part 120 and the module communication part 250 only when they operate. For example, when measurement is performed, the power control part 260 supplies electric power to the sensor element 110 and the sensor data processing part 120. When data processing is performed, the power control part 260 supplies electric power to the sensor data processing part 120. When communication is performed, the power control part 260 supplies electric power to the module communication part 250. On standby (when the sensor module 200 is idle), the power control part 260 supplies standby power to the module communication part 250. The power control part 260 constantly supplies electric power to the module control part 170 (on standby, the power control part 260 supplies standby power).

The exemplary functional configuration in Fig. 5 can be implemented simply by software causing the microcomputer 205 in Fig. 4, which is hardware, to function as the sensor data processing part 120, the sensor data recording part 130, the power control part 260 and the module control part 170. However, the configuration of hardware is not limited to the one illustrated in Fig. 4. For example, if the module communication part 250 is implemented inside the microcomputer 205, the wireless IC 206 is not necessary. Alternatively, the microcomputer 205 may be configured to function as the power control part 160 and the module control part 170 whereas the sensor data processing part 120, the sensor data recording part 130 and the module communication part 250 may be implemented by separate pieces of hardware.

The sensor module of the second embodiment can be readily attached and detached because the housing 101 comprises the attaching means. Since the sensor module has the sensor element 110 and the sensor data processing part 120, a function can be added. Furthermore, a new sensor module can be developed at low cost by changing the processing performed by the sensor element 110 and the sensor data processing part 120. Moreover, since the sensor module comprises the data transmitting and receiving antenna 240 and the module communication part 250, which are contactless communication means, the waterproofness of the mobile terminal can be maintained. By making the sensor module 200 waterproof, the waterproofness of the entire system can be achieved even though the additional function is added.

### [Variation]

If power consumption in the sensor module 200 is sufficiently small compared with electric power supplied from the battery 280 or if power consumption when the sensor element 110, the sensor data processing part 120 and the module communication part 250 are not operating is small, the power control part 260 in Fig. 5 can be omitted. In that case, electric power supplied from the battery 280 is supplied to the sensor element 110, the sensor data processing part 120, the module communication part 250 and the module control part 170 regardless of whether or not they are operating.

**[DESCRIPTION OF REFERENCE NUMERALS]**

| | | | |
|---|---|---|---|
| 100, 200 | Sensor module | 101 | Housing |
| 105, 205 | Microcomputer | 106, 206 | Wireless IC |
| 110 | Sensor element | 120 | Sensor data processing part |
| 130 | Sensor data recording part antenna | 140, 940 | Contactless power supply |
| 150, 250 | Module communication part | 160, 260 | Power control part |
| 170 | Module control part antenna | 240, 840 | Data transmitting and receiving |
| 280 | Battery | 800, 900 | Mobile terminal |
| 810, 910 | Application part | 850, 950 | Terminal communication part |
| 930 | Terminal recording part | 970 | Terminal control part |

## Claims

1. A sensor module comprising:
a housing including attaching means for attaching and detaching the sensor module to and from a mobile terminal;
a sensor element;
a sensor data processing part acquiring data from the sensor element and performing predetermined processing on the acquired data;
a sensor data recording part recording data acquired or processed by the sensor data processing part;
a contactless power supply antenna capable of electromagnetically coupling with the mobile terminal without contacting the mobile terminal;
a module communication part transmitting and receiving data to and from the mobile terminal through the contactless power supply antenna; and
a module control part controlling the sensor element, the sensor data processing part and the module communication part.

2. A sensor module comprising:
a housing including attaching means for attaching and detaching the sensor module to and from a mobile terminal;
a sensor element;
a sensor data processing part acquiring data from the sensor element and performing predetermined processing on the acquired data;
a sensor data recording part recording data acquired or processed by the sensor data processing part;
a battery;
a module communication part transmitting and receiving data to and from the mobile terminal via wireless or infrared communication; and
a module control part controlling the sensor element, the sensor data processing part and the module communication part.

3. The sensor module according to claim 1 or 2, further comprising:
a power control part supplying electric power to the sensor element, the sensor data processing part and the module communication part only when the sensor element, the sensor data processing part and the module communication part operate;
wherein the module control part sends information for controlling which of the sensor element, the sensor data processing part and the module communication part is to be activated to the power control part.

4. The sensor module according to claim 3, wherein the power control part is ready to provide electric power to the module communication part when the sensor module is in a standby state.

5. The sensor module according to one of claims 1 to 4, configured to be externally attached to a housing of the mobile terminal.
